# EUROPEAN PATENT APPLICATION

(11) **EP 4 597 682 A1**
(43) Date of publication of application: **06.08.2025**
(21) Application number: 23873158.2
(22) Date of filing: 26.09.2023
(51) Int. Cl.: H01M 10/42, H01M 10/0587

(54) **ELECTRODE ASSEMBLY AND SECONDARY BATTERY INCLUDING SAME**

(30) Priority: 30.09.2022 KR 20220125849
(71) Applicant: LG Energy Solution, Ltd., Seoul 07335 (KR)
(72) Inventor: PARK, Ji Sung, Daejeon 34122 (KR)
(74) Representative: Goddar, Heinz J.
(86) International application number: PCT/KR2023/014926
(87) International publication number: WO 2024/072047

(57) **Abstract**

The present invention relates to an electrode assembly and a secondary battery including same. The electrode assembly according to an embodiment of the present invention is formed by a cathode, a separator, and an anode which are wound together, and may comprise a protective member which is arranged to face an end of at least one of the cathode and the anode and in which a flame retardant is filled.

## Description

### TECHNICAL FIELD

### CROSS-REFERENCE TO RELATED APPLICATION

The present application claims the benefit of the priority of Korean Patent Application No. 10-2022-0125849, filed on September 30, 2022, which is hereby incorporated by reference in its entirety.

### TECHNICAL FIELD

The present invention relates to an electrode assembly and a device including the same, and more specifically, to an electrode assembly capable of improving safety and a secondary battery including the same.

### BACKGROUND ART

Recently, as demands for portable electronic products such as laptops, video cameras, and mobile phones have rapidly increased, and development of electric vehicles, energy storage batteries, robots, satellites, etc. is regularized, a lot of researches have been conducted on a secondary battery used as a driving power source.

Rechargeable batteries are classified into coin type batteries, cylindrical type batteries, prismatic type batteries, and pouch type batteries according to a shape of a battery case. The electrode assembly mounted inside the battery case is a chargeable and dischargeable power generation device having a structure in which electrodes and separators are stacked.

When a charge/discharge cycle of the secondary battery including such the electrode assembly is repeated, swelling of the electrode assembly may occur, and a winding central portion of the electrode assembly may be deformed. If the winding central portion of the electrode assembly is not maintained in its original shape and is deformed, an internal short circuit or disconnection may occur during the charge/discharge cycle to significantly deteriorate the safety.

### DISCLOSURE OF THE INVENTION

### TECHNICAL PROBLEM

Embodiments of the present invention provide an electrode assembly capable of improving safety and a secondary battery including the same.

The object of the present invention is not limited to the aforesaid, but other objects not described herein will be clearly understood by those skilled in the art from descriptions below.

### TECHNICAL SOLUTION

An electrode assembly according to an embodiment of the present invention may be provided by winding a positive electrode, a separator, and a negative electrode and include a protection member disposed to face an end of at least one of the positive electrode or the negative electrode and filled with a flame retardant therein.

According to an embodiment, the protection member may be disposed to face an electrode, which has a relatively short length, of the positive electrode and the negative electrode.

According to an embodiment, the protection member may be disposed on the separator to face a start end at which winding of the positive electrode starts.

According to an embodiment, the negative electrode may include an extension area that further extends than the positive electrode in a direction opposite to a winding direction of the electrode assembly, and the protection member may overlap the extension area of the negative electrode.

According to an embodiment, the protection member may include: a first insulating layer disposed on the separator and having a plurality of pores into which the flame retardant is filled; a second insulating layer disposed on the first insulating layer and disposed to be directed toward a winding central portion of the electrode assembly; and an adhesive layer disposed between the first insulating layer and the second insulating layer.

According to an embodiment, the second insulating layer may have a thickness less than that of the first insulating layer and greater than or equal to that of the adhesive layer.

According to an embodiment, the first insulating layer may have a thickness of 50 to 70% of the total thickness of the protection member, the second insulating layer may have a thickness of 20 to 30% of the total thickness of the protection member, and the adhesive layer may have a thickness of 10 to 20% of the total thickness of the protection member.

According to an embodiment, the second insulating layer may have a melting temperature less than that of the first insulating layer.

According to an embodiment, the first insulating layer may include at least one of polyimide (PI) or polyethylene terephthalate (PET), and the second insulating layer may include any one of polyethylene (PE), polypropylene (PP), and polyurethane (PU).

According to an embodiment, the first insulating layer may include: a first insulating area; and a second insulating area disposed at each of both sides of the first insulating area, wherein the plurality of pores may be defined in the first insulating area except for the second insulating area.

According to an embodiment, the flame retardant may include a flame retardant liquid containing fluorine.

According to an embodiment, the positive electrode may include: a positive electrode collector; a first active material layer disposed on an upper portion of the positive electrode collector; and a second active material layer disposed on a lower portion of the positive electrode collector, wherein the protection member may be in contact with a start end of at least one of the positive electrode collector, the first active material layer, or the second active material layer.

According to an embodiment, the electrode assembly may further include a negative electrode tab that is electrically connected to the negative electrode, wherein the protection member may have a width less than or equal to a spaced distance between a start end of the positive electrode and the negative electrode tab.

According to an embodiment, the protection member may have the same thickness as that of the positive electrode.

According to an embodiment, the electrode assembly may further include a fire extinguishing agent filled into the protection member.

A secondary battery according to an embodiment of the present invention may include the above-described electrode assembly.

### ADVANTAGEOUS EFFECTS

According to the embodiments of the present invention, the electrode assembly may include the protection member facing the winding start end at which the winding of the positive electrode starts. The protection member may prevent the cracks in the negative electrode from occurring at the portion that is in contact with the winding start end of the positive electrode to prevent the disconnection or the short circuit, thereby improving the safety of the secondary battery.

In addition, according to the embodiments of the present invention, the winding central portion of the electrode assembly may be easily maintained in its original shape through the protection member. Therefore, the internal short circuits may be prevented from occurring during the charge/discharge cycle of the secondary battery including the electrode assembly to ensure the safety.

In addition, according to the embodiments of the present invention, the filling member containing the flame retardant may be filled into the protection member. The protection member containing this flame retardant may prevent the increase in temperature of the secondary battery from leading to the ignition or explosion.

In addition, the various effects that are directly or indirectly identified through the present disclosure may be provided.

### BRIEF DESCRIPTION OF THE DRAWINGS

FIG. 1 is a perspective view of a secondary battery including an electrode assembly according to a first embodiment of the present invention.
FIG. 2 is an exploded perspective view illustrating an unfolded state before the electrode assembly of FIG. 1 is wound.
FIG. 3 is a cross-sectional view illustrating an unfolded state before the electrode assembly of FIG. 1 is wound.
FIG. 4 is a plan and cross-sectional views of the protection member according to the present invention.
FIG. 5 is an enlarged cross-sectional view illustrating the periphery of a winding central portion of after the electrode assembly of FIG. 2 is wound.
FIG. 6 is a cross-sectional view illustrating an unfolded state before an electrode assembly is wound according to a second embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following embodiments.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Secondary battery including electrode assembly according to first embodiment

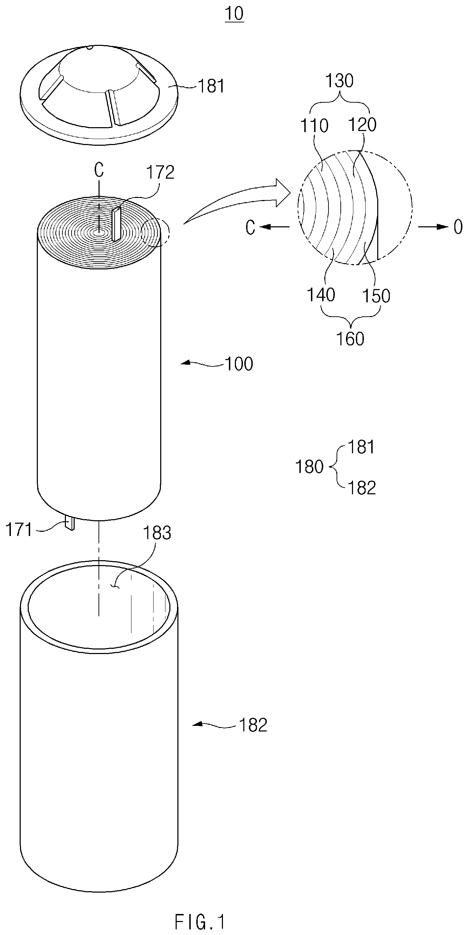

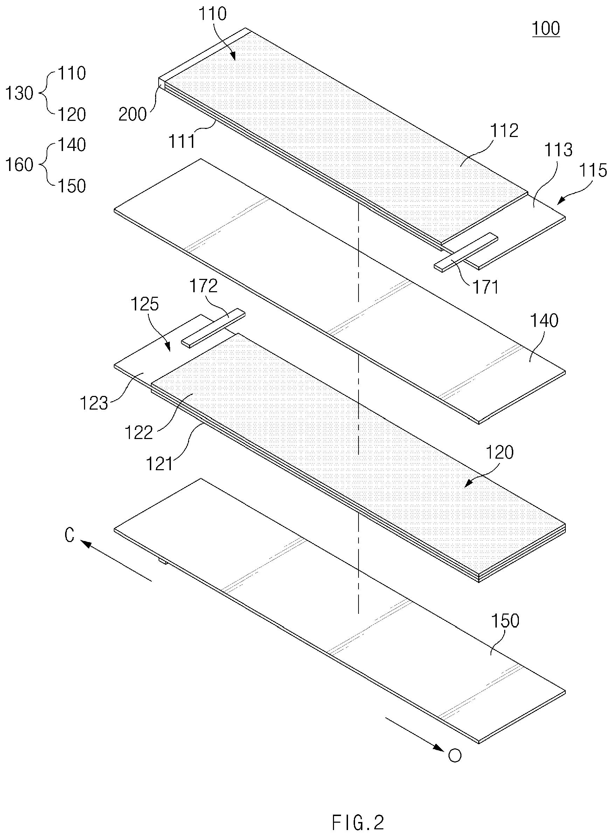

FIG. 1 is a perspective view of a secondary battery including an electrode assembly according to a first embodiment of the present invention, and FIG. 2 is an exploded perspective view illustrating an unfolded state before the electrode assembly of FIG. 1 is wound.

Referring to FIGS. 1 to 2, a secondary battery 10 according to an embodiment of the present invention may include an electrode assembly 100 and a battery case 180.

The electrode assembly 100 may be accommodated in the battery case 180. The battery case 180 may include a battery can 182 and a cap assembly 181.

The battery can 182 may include an accommodation part 183 in which the electrode assembly 100 is accommodated. An electrolyte may be injected into the accommodation part 183 so that the electrode assembly 100 is completely immersed in the battery can 182. An upper portion of the battery can 182 may be opened to be used as an inflow passage of the electrode assembly 100. The battery can 182 may include a metal. For example, the battery can 182 may include stainless steel.

Since the battery can 182 accommodates the electrode assembly 100, the battery can 182 may be provided in a shape corresponding to that of the electrode assembly 100. For example, the battery can 182 may be provided in a cylindrical shape so that the electrode assembly 100, which is provided in a jelly-roll shape, is accommodated.

The cap assembly 181 may be mounted on the battery can 182 to cover the opened upper portion of the battery can 182 and be coupled to the battery can 182. The cap assembly 181 may be provided by sequentially stacking a safety belt, a current blocking element, a positive temperature coefficient (PTC) element, and a top cap. The top cap is seated and coupled to the uppermost portion of the cap assembly 181 to transmit current generated in the secondary battery to the outside.

One of the battery can 182 and the cap assembly 181 may be electrically connected to a positive electrode tab 171 of the electrode assembly 100, and the other one of the battery can 182 and the cap assembly 181 may be electrically connected to a negative electrode tab 172 of the electrode assembly 100. For example, the cap assembly 181 may be electrically connected to the positive electrode tab 171 through a welding process, and a bottom surface of the battery can 182 may be electrically connected to the negative electrode tab 172 through a welding process. As another example, one of the battery can 182 and the cap assembly 181 may be electrically connected to the positive electrode tab 171 and the negative electrode tab 172.

The electrode assembly 100 may be a chargeable and dischargeable power generating element. The electrode assembly 100 has a structure in which electrodes 130 and separators 160 are combined and alternately stacked. The electrode assembly 100 may be provided in a shape in which the electrodes 130 and the separators 160 are alternately combined to be wound. The electrode assembly 100 may have a structure of which a diameter is expanded radially in proportion to the number of winding rotation. Here, the electrode assembly 100 may be wound in a cylindrical shape wound around a winding central portion (or central axis) C. For example, the electrode 130 may include a positive electrode 110 and a negative electrode 120, and the separator 160 may include a first separator 140 and a second separator 150. The electrode assembly 100 may be an electrode assembly that is in the form of a jelly roll, which is wound in a cylindrical shape by sequentially stacking a positive electrode 110, a first separator 140, a negative electrode 120, and a second separator 150.

The positive electrode 110 may include a positive electrode collector 113, a first positive electrode active material layer 111 disposed on an outer surface (e.g., surface facing a winding outer portion O) of the positive electrode collector 113, and a second positive electrode active material layer 112 disposed on an inner surface (e.g., surface facing a winding central portion C) 123b of the positive electrode collector 113. The positive electrode collector 113 may extend further than at least one of the first positive electrode active material layer 111 or the second positive electrode active material layer 111 toward the winding outer portion O. An area on which at least one of the first positive electrode active material layer 111 or the second positive active material layer 111 is not disposed, but the positive electrode collector 113 is disposed may be a positive electrode non-coating portion 115. At least one positive electrode tab 171 may be fused to the positive electrode collector 113 of the positive electrode non-coating portion 115 by a method such as welding.

The positive electrode collector 113 may be provided as, for example, foil made of an aluminum material. At least one of the first positive electrode active material layer 111 or the second positive electrode active material layer may include, for example, lithium manganese oxide, lithium cobalt oxide, lithium nickel oxide, lithium iron phosphate, or a compound containing at least one of these and mixtures thereof.

The negative electrode 120 may include a negative electrode collector 123, a first negative electrode active material layer 121 disposed on an outer surface (e.g., surface facing the winding outer portion O) of the negative electrode collector 123, and a second negative electrode active material layer 122 disposed on an inner surface (e.g., surface facing the winding central portion C) of the negative electrode collector 123. The negative electrode 120 may be divided into a negative electrode coating portion (or coating portion) and a negative electrode non-coating portion (or non-coating portion) 125 according to formation positions of the first negative electrode active material layer 121 and the second negative electrode active material layer 122. The negative electrode coating portion may be an area on which the first negative electrode active material layer 121 and the second negative electrode active material layer 122 are disposed. The negative electrode non-coating portion 125 may be an area on which at least one of the first negative electrode active material layer 121 or the second negative electrode active material layer 122 is not disposed. At least one negative electrode tab 172 may be fused to the negative electrode collector 123 of the negative electrode non-coating portion 125 by a method such as welding.

The negative electrode collector 123 may be, for example, provided as foil made of a copper (Cu) or nickel (Ni) material. At least one of the first negative electrode active material layer 121 or the second negative electrode active material layer 122 may include, for example, synthetic graphite, a lithium metal, a lithium alloy, carbon, petroleum coke, activated carbon, graphite, a silicon compound, a tin compound, a titanium compound, or an alloy thereof. At least one of the first negative electrode active material layer 121 or the second negative electrode active material layer 122 may contain, for example, non-graphite SiO (silica) or SiC (silicon carbide).

The separator 160 may be disposed between the positive electrode 110 and the negative electrode 120 to separate and electrically insulate the positive electrode 110 from the negative electrode 120. The separator 160 may include a first separator 140 and a second separator 150. The first separator 140 may be stacked on the outside of either the positive electrode 110 or the negative electrode 120. The second separator 150 may be stacked on the outside of the other one of the positive electrode 110 and the negative electrode 120. For example, when the first separator 140 is stacked on the outside of the positive electrode 110, the first separator 140 may be disposed between the first positive electrode active material layer 121 and the second negative electrode active material layer 112. When the second separator 150 is stacked on the outside of the negative electrode 120, the second separator 150 may be disposed between the second positive electrode active material layer 122 and the first negative electrode active material layer 111. When a stack, in which the positive electrode 110, the first separator 140, the negative electrode 120, and the second separator 150 are sequentially stacked, is wound, the jelly roll-type electrode assembly 100 in which the second separator 150 is disposed on the outermost surface, may be provided.

At least one of the first separator 140 or the second separator 150 may be, for example, a multi-layered film produced by polyethylene, polypropylene, or a combination thereof or a polymer film for solid polymer electrolytes or gel-type polymer electrolytes such as polyvinylidene fluoride, polyethylene oxide, polyacrylonitrile, or polyvinylidene fluoride hexafluoropropylene copolymers.

The electrode assembly 100 according to the present invention may include a protection member 200 disposed to face an end of at least one of the positive electrode 110 or the negative electrode 120. The protection member 200 may be disposed to face a starting end of the shorter electrode of the positive electrode 110 and the negative electrode 120. The protection member 200 may be disposed closer to the winding central portion C than to the winding outer portion O. The protection member 200 may be disposed to be long along a width direction of either the first separator 140 or the second separator 150. The protection member 200 may be disposed parallel to at least one of the positive electrode tab 171 or the negative electrode tab 172.

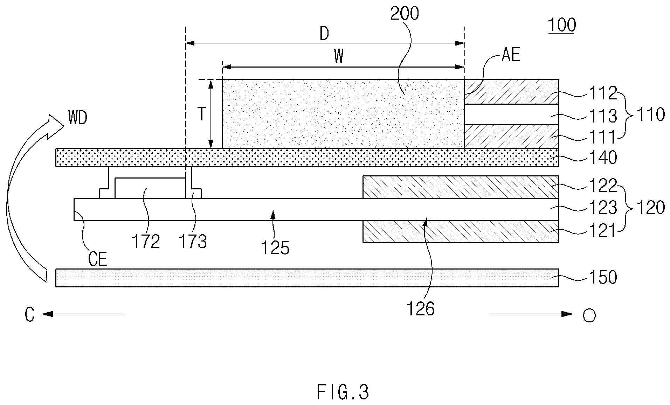

FIG. 3 is a cross-sectional view illustrating an unfolded state before the electrode assembly of FIG. 2 is wound. In FIG. 3, the positive electrode 110, the first separator 140, the negative electrode 120, and the second separator 150 are illustrated to be spaced apart from each other, but the positive electrode 110, the first separator 140, the negative electrode 120, and the second separator 150 may be in close contact with each other after being wound.

Referring to FIG. 3, since the negative electrode 120 is disposed to surround the positive electrode 110 when wound, the negative electrode 120 may be provided to be longer than the positive electrode 110. The negative electrode 120 may include an extension area 126 extending further than the positive electrode 110 in a direction opposite to a winding direction WD of the electrode assembly. The winding direction WD may refer to a direction in which the negative electrode 120 and the positive electrode 110 are wound. In FIG. 3, the winding direction WD may be in a clockwise direction.

The protection member 200 may overlap the extension area 126 of the negative electrode 120 and may be disposed to face the winding start end AE of the positive electrode 110. The protection member 200 may be disposed on the first separator 140 and be in contact with the winding start end AE of the positive electrode 110. The protection member 200 may be in contact with the winding start end AE of at least one of the first positive electrode active material layer 111, the second positive electrode active material layer 112, or the positive electrode collector 113.

The protection member 200 may be disposed on one surface of the first separator 140 facing the winding central portion C. The protection member 200 may have a thickness T corresponding to that of the positive electrode 110. The thickness T of the protection member 200 may be the same as the thickness of the positive electrode 110. For example, the thickness of the protection member 200 may be 90 µm to 150 um, and in the present invention, the thickness of the protection member 200 is not limited. Since the thickness of the positive electrode 110 may vary according to product characteristics of the electrode assembly, the thickness of the protection member may be provided to be the same as that of the positive electrode according to the product characteristics.

The protection member 200 may be disposed to be wound from the winding start end AE of the positive electrode 110 toward the winding central portion C. The protection member 200 may extend from the winding start end AE of the positive electrode 110 toward the winding central portion C. As an example, the protection member 200 may be disposed between the winding start end AE of the positive electrode 110 and the winding start end CE of the negative electrode 120. As another example, the protection member 200 may be disposed between the winding start end AE of the positive electrode 110 and the negative electrode tab 172. A width W of the protection member 200 may be less than or equal to a distance D from the winding start end AE of the positive electrode to the negative electrode tab 172. For example, the width W of the protection member 200 may be 10 mm to 21 mm. A protection tab 173 may be attached to at least one of the negative electrode tab 172 or the positive electrode tab (e.g., the positive electrode tab 171 in FIG. 1). The protection tab 173 may alleviate a stepped portion provided by the electrode tabs 171 and 172 to prevent the separator 140,150 facing the electrode tab 171,172 from being damaged.

The protection member 200 may cover a stepped portion of the winding start end AE of the positive electrode 110. The protection member 200 may remove the stepped portion of the winding start end AE corresponding to a maximum thickness of the positive electrode 110. The negative electrode 120, which is contracted and expanded as charging and discharging of the secondary battery are performed, may not be bent to the winding start end AE of the positive electrode 110 by the protection member 200. The winding start end AE of the positive electrode may be prevented from being in contact with the negative electrode. Thus, since cracks of the first separator 140 are prevented from occurring by the winding start end AE of the positive electrode 110, electrical short circuit may be prevented from occurring between the negative electrode 120 and the positive electrode 110.

In addition, the winding central portion C of the electrode assembly may be easily maintained in tis circular shape through the protection member 200. Therefore, the internal short circuits may be prevented from occurring during the charge/discharge cycle of the secondary battery including the electrode assembly to ensure the safety.

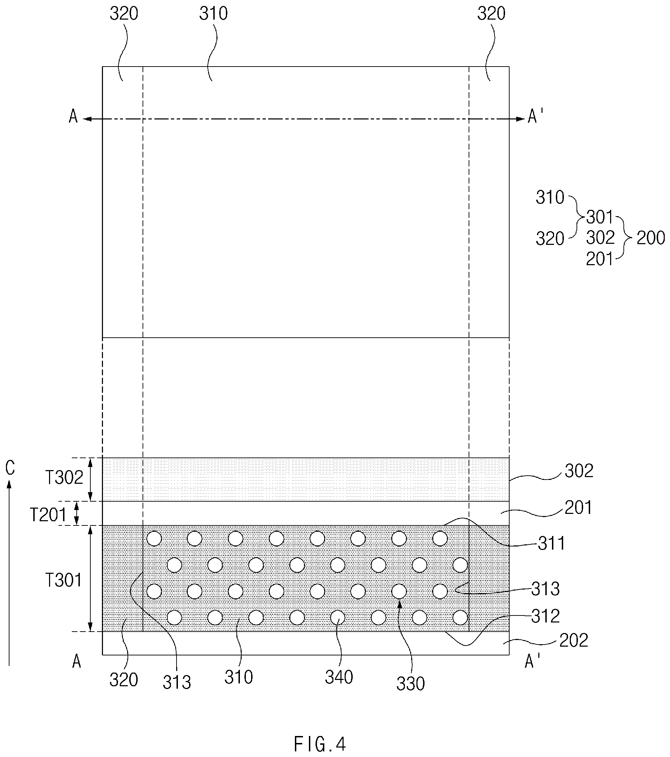

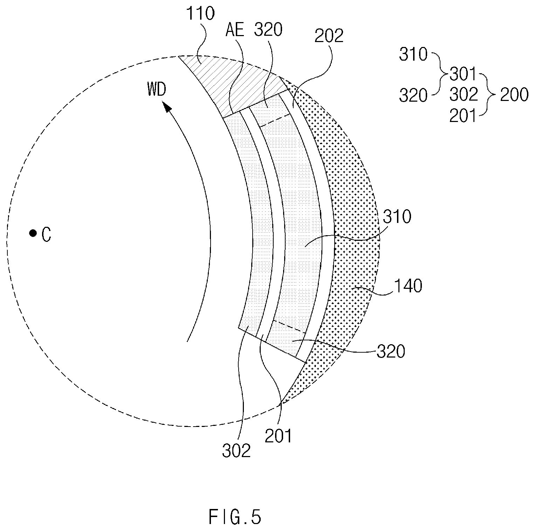

FIG. 4 is a plan and cross-sectional views of the protection member according to the present invention, and FIG. 5 is an enlarged cross-sectional view illustrating the periphery of the winding central portion C of after the electrode assembly of FIG. 2 is wound.

Referring to FIGS. 4 and 5, the protection member 200 may be provided in the form of an insulating tape. The protection member 200 may include a first insulating layer 301, an adhesive layer 201, and a second insulating layer 302, which are sequentially stacked on one surface of the first separator 140.

The adhesive layer 201 may be disposed between the first insulating layer 301 and the second insulating layer 302 to allow the first insulating layer 301 and the second insulating layer 302 to adhere to each other. In addition, the protection member 200 may be attached to the first separator 140 through the second adhesive layer 202. The second adhesive layer 202 may be disposed between the first insulating layer 301 and the first separator 140.

The first insulating layer 301 may include a first insulating area 310 and a second insulating area 320.

The first insulating area 310 may include a first surface 311, a second surface 312, and a third surface 313. The first surface 311 may be disposed to face the winding central portion C (or the second insulating layer 302). The second surface 312 may be disposed to face an opposite direction to the first surface 311 (or toward the second adhesive layer 202 or the first separator 140). The third surface 313 may be provided in plurality between the first surface 311 and the second surface 312. A plurality of third surfaces 313 may be disposed to intersect the first surface 311 and the second surface 312.

The first insulating area 310 may include a plurality of pores 330. A first filling member 340 may be filled into the plurality of pores 330. For example, the first filling member 340 may be a flame retardant liquid (or flame retardant) containing fluorine (F). The first filling member 340 that is in a liquid state may flow out of the protection member 200 when the secondary battery (e.g., the secondary battery 10 in FIG. 1) is in an abnormal operating state such as an overcurrent state or a high temperature state. The first filling member 340 may flow out to the winding central portion C in the abnormal operating state of the secondary battery 10 to cool the electrode assembly. The first filling member 340 may prevent an increase in temperature of the secondary battery from leading to ignition or explosion.

The second insulating area 320 may be disposed to surround a portion of the first insulating area 310. As an example, the second insulating area 320 may be disposed to surround the plurality of third surfaces 313 excluding the first and second surfaces 311 and 312 of the first insulating area 310. As another example, the second insulating area 320 may be disposed to surround the second surface 312 excluding the first surface 311 of the first insulating area 310 and the plurality of third surfaces 313. The second insulating area 320 may serve to confine the first filling member 340 within the first insulating area 310 to prevent the first filling member 340 that is in the liquid state from flowing out during a normal operation of the secondary battery.

The first insulating area 310 and the second insulating area 320 may be made of different materials or may be integrated with the same material. At least one of the first insulating area 310 or the second insulating area 320 may be made of an electrically insulating plastic material. Each of the first insulating area 310 and the second insulating area 320 may be made of a material that has a melting point higher than that of the second insulating layer 302 and is not easily melted at a high temperature. For example, the first insulating layer 301 including the first insulating area 310 and the second insulating area 320 may include at least one of polyimide (PI) or polyethylene terephthalate (PET).

The second insulating layer 302 may be disposed on the adhesive layer 201 to face the winding central portion C. The second insulating layer 302 may be disposed closer to the winding central portion C than at least one of the adhesive layer 201 or the first insulating layer 301.

The second insulating layer 302 and the adhesive layer 201 may be provided to be easily melted at a high temperatures. For example, the second insulating layer 302 and the adhesive layer 201 may be provided to be melted when an internal temperature of the secondary battery exceeds 100 degrees Celsius. As the second insulating layer 302 and the adhesive layer 201 are melted at a high temperature, the flame retardant 340 inside the first insulating layer 301 may flow out of the protection member 200. The second insulating layer 302 may be made of a material having a melting point lower than that of the first insulating layer 301. For example, the second insulating layer 302 may include any one of polyethylene (PE), polypropylene (PP), and polyurethane (PU) .

The first insulating layer 301 provided in the protection member 200 may be provided to be thicker than that of each of the adhesive layer 201 and the second insulating layer 302. The second insulating layer 302 may be provided to have a thickness equal to or greater than that of the adhesive layer 201. A thickness T301 of the first insulating layer 301 may account for 50 to 70% of the total thickness of the protection member 200. The thickness T302 of the second insulating layer 302 may account for 20 to 30% of the total thickness of the protection member 200. A thickness T201 of the adhesive layer 201 may account for 10 to 20% of the total thickness of the protection member 200. Since the first insulating layer 301 is provided to be thicker than each of the adhesive layer 201 and the second insulating layer 302, a proportion of the first filling member 340 filled in the first insulating layer 301 in the protection member 200 may increase. Thus, the protection member including the first filling member 340 may prevent an increase in temperature of the secondary battery from leading to the ignition or explosion.

### Electrode assembly according to second embodiment

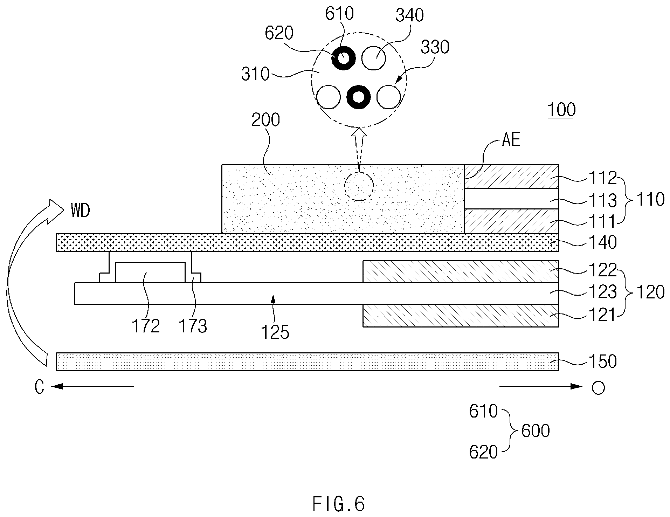

FIG. 6 is a cross-sectional view illustrating an unfolded state before an electrode assembly is wound according to a second embodiment of the present invention.

An electrode assembly according to a second embodiment of the present invention may have the same components as the electrode assembly according to the first embodiment of the present invention, which is illustrated in FIGS. 1 to 5, except that a first filling member 340 and a second filling member 600 are filled in a plurality of pores 330. Thus, detailed descriptions of the same components will be cited from the descriptions of FIGS. 1 to 5.

Referring to FIG. 6, a protection member 200 may include a plurality of pores 330. Some of the plurality of pores 330 may be filled with a first filling member 340. Others of the plurality of pores 330 may be filled with a second filling member 600. The first filling member 340 and the second filling member 600 may be made of different materials. The first filling member 340 may include a flame retardant liquid. As an example, the second filling member 600 may include a fire extinguishing agent 610. As another example, the second filling member 600 may be provided in a form in which a shell 620 surrounds a core containing the fire extinguishing agent 610. Since the shell 620 is melted when the secondary battery is ignited, the fire extinguishing agent 610 contained in the core may be discharged toward a winding central portion C. The fire extinguishing agent 610 contained in the second filling member 600 may not chemically react with a flame retardant contained in the first filling member 340.

The fire extinguishing agent 610 may be discharged toward the center of the coil C when the secondary battery is ignited to extinguish fire in a short time and prevent the fire of the ignited electrode assembly 100 from spreading to the adjacent electrode assembly 100.

The secondary battery including the above-described electrode assembly may be applied to various devices. It may be applied to transportation means such as electric bicycles, electric vehicles, hybrids, etc., but is not limited thereto and may be applied to various devices capable of using the battery module.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

100: Electrode assembly
110: First electrode
120: Second electrode
140: First separator
150: Second separator
171,172: Electrode tab
200: Protection member
340, 600: Filling member

## Claims

1. An electrode assembly in which a positive electrode, a separator, and a negative electrode are wound, the electrode assembly comprising:
a protection member disposed to face an end of at least one of the positive electrode or the negative electrode and filled with a flame retardant therein.

2. The electrode assembly of claim 1, wherein the protection member is disposed to face an electrode, which has a relatively short length, of the positive electrode and the negative electrode.

3. The electrode assembly of claim 1, wherein the protection member is disposed on the separator to face a start end at which winding of the positive electrode starts.

4. The electrode assembly of claim 1, wherein the negative electrode comprises an extension area that further extends than the positive electrode in a direction opposite to a winding direction of the electrode assembly, and
the protection member overlaps the extension area of the negative electrode.

5. The electrode assembly of claim 1, wherein the protection member comprises:
a first insulating layer disposed on the separator and having a plurality of pores into which the flame retardant is filled;
a second insulating layer disposed on the first insulating layer and disposed to be directed toward a winding central portion of the electrode assembly; and
an adhesive layer disposed between the first insulating layer and the second insulating layer.

6. The electrode assembly of claim 5, wherein the second insulating layer has a thickness less than that of the first insulating layer and greater than or equal to that of the adhesive layer.

7. The electrode assembly of claim 5, wherein the first insulating layer has a thickness of 50 to 70% of the total thickness of the protection member,
the second insulating layer has a thickness of 20 to 30% of the total thickness of the protection member, and
the adhesive layer has a thickness of 10 to 20% of the total thickness of the protection member.

8. The electrode assembly of claim 5, wherein the second insulating layer has a melting temperature less than that of the first insulating layer.

9. The electrode assembly of claim 5, wherein the first insulating layer comprises at least one of polyimide (PI) or polyethylene terephthalate (PET), and
the second insulating layer comprises any one of polyethylene (PE), polypropylene (PP), and polyurethane (PU).

10. The electrode assembly of claim 5, wherein the first insulating layer comprises:
a first insulating area; and
a second insulating area disposed at each of both sides of the first insulating area,
wherein the plurality of pores are defined in the first insulating area except for the second insulating area.

11. The electrode assembly of claim 1, wherein the flame retardant comprises a flame retardant liquid containing fluorine.

12. The electrode assembly of claim 1, wherein the positive electrode comprises:
a positive electrode collector;
a first active material layer disposed on an upper portion of the positive electrode collector; and
a second active material layer disposed on a lower portion of the positive electrode collector,
wherein the protection member is in contact with a start end of at least one of the positive electrode collector, the first active material layer, or the second active material layer.

13. The electrode assembly of claim 1, further comprising a negative electrode tab that is electrically connected to the negative electrode,
wherein the protection member has a width less than or equal to a spaced distance between a start end of the positive electrode and the negative electrode tab.

14. The electrode assembly of claim 1, wherein the protection member has the same thickness as that of the positive electrode.

15. The electrode assembly of claim 1, further comprising a fire extinguishing agent filled into the protection member.

16. A secondary battery comprising the electrode assembly of any one of claims 1 to 15.
